(19) Europäisches Patentamt
European Patent Office
Office européen des brevets

(11) Veröffentlichungsnummer: **0 481 296 A2**

# (12) EUROPÄISCHE PATENTANMELDUNG

(21) Anmeldenummer: **91116907.6**

(22) Anmeldetag: **04.10.91**

(51) Int. Cl.5: **C08G 64/30**, C08G 64/18, C08G 64/08, C08G 63/64

(30) Priorität: **17.10.90 DE 4032924**

(43) Veröffentlichungstag der Anmeldung: **22.04.92 Patentblatt 92/17**

(84) Benannte Vertragsstaaten: **BE DE ES FR GB IT NL**

(71) Anmelder: **BAYER AG**

**W-5090 Leverkusen 1 Bayerwerk(DE)**

(72) Erfinder: **Kühling, Steffen, Dr.**
**Scheiblerstrasse 83**
**W-4150 Krefeld(DE)**
Erfinder: **Pakull, Ralf, Dr.**
**Am Braunsacker 80**
**W-5000 Köln 71(DE)**
Erfinder: **Grigo, Ulrich, Dr.**
**Michelsheide**
**W-4152 Kempen 3(DE)**
Erfinder: **Tacke, Peter, Dr.**
**Brandenburger Strasse 12**
**W-4150 Krefeld 12(DE)**
Erfinder: **Freitag, Dieter, Dr.**
**Hasenheide 10**
**W-4150 Krefeld 1(DE)**
Erfinder: **Alewelt, Wolfgang, Dr.**
**Stratumer Feld 17**
**W-4150 Krefeld 12(DE)**

## (54) Herstellung von lösungsmittelfreiem Polycarbonat durch Festphasenpolykondensation von Oligomeren.

(57) Gegenstand der Erfindung ist ein dreistufiges Verfahren zur Herstellung von lösungsmittelfreiem Polycarbonat, das dadurch gekennzeichnet ist, daß man mittels des bekannten Phasengrenzflächenverfahrens zwei verschiedene Oligocarbonate herstellt, eine Mischung der beiden verschiedenen Oligocarbonate untereinander oder eines der Oligocarbonate mit geeigneten Monomeren kristallisiert und anschließend in der festen Phase polykondensiert.

EP 0 481 296 A2

Gegenstand der vorliegenden Erfindung ist ein Verfahren zur Herstellung von lösungsmittelfreiem Polycarbonat mit einem $M_w$ von 15.000 bis 200.000 und einem OH Gew.-%-Endgruppengehalt <250 ppm, dadurch gekennzeichnet, daß man

1. mittels des bekannten Phasengrenzflächenverfahrens zwei verschiedene, definiert terminierte Oligocarbonate der Formeln 1 und 2 herstellt,

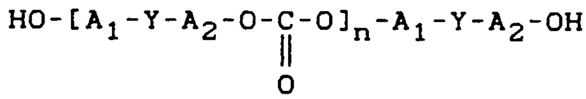 (1)

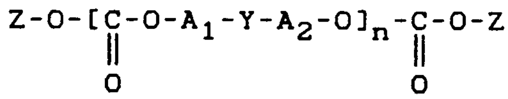 (2)

wobei

| | | |
|---|---|---|
| $A_1$, $A_2$ | = | unabhängige, divalente carbocyclische oder heterocyclische aromatische Gruppen, |
| Y | = | eine divalente Gruppe oder eine Einfachbindung und |
| Z | = | Alkyl- oder Arylgruppen darstellen und |
| n | = | Zahlen von 1 bis 75 annehmen kann, |

2. eine Mischung der beiden verschiedenen Oligomeren der Formeln 1 und 2 oder eine Mischung von einem Oligomeren/Monomeren der Formeln 1 und 3 bzw. der Formeln 2 und 4

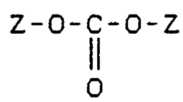 (3)

$HO-A_1-Y-A_2-OH$ (4),

worin

| | | |
|---|---|---|
| $A_1$, $A_2$ | = | unabhängige, divalente carbocyclische oder heterocyclische aromatische Gruppen, |
| Y | = | eine divalente Gruppe oder eine Einfachbindung und |
| Z | = | Alkyl- oder Arylgruppen sind, kristallisiert |

und

3. anschließend in der festen Phase polykondensiert.

Bevorzugte divalente Gruppen -Y- sind Alkylen, Alkyliden, Cycloalkylen, Cycloalkyliden, -S-, -O-,

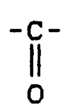 ,

$-SO_2-$, -SO- und

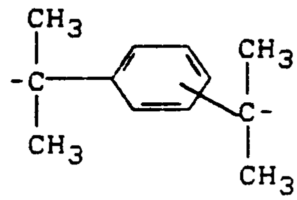 .

Die Herstellung von aromatischen Oligo-/Polycarbonaten nach dem Phasengrenzflächenverfahren ist literaturbekannt und in den deutschen Patentschriften 959 947, 971 777, 971 790 und 1 007 996 oder beispielsweise im JP 99 619 beschrieben. Die Kristallisation von Oligo-/Polycarbonaten ist z.B. im J. Polymer Sc. Part A-2, 4, 327 (1966); J. Polymer Sci. Phy. Ed. 14, 1367 (1976); J. Polymer Sci. Polymer Letters Ed. 16, 419 (1978); US-PS 3 112 292, 4 631 338 beschrieben. Die Festphasennachkondensation von Oligocarbonaten, die mit Hilfe der Schmelzeumesterung dargestellt wurde, ist in der EP Anmeldung 338 085 beschrieben, die Festphasennachkondensation von Oligocarbonaten, die mittels des Phasengrenzflächenverfahrens synthetisiert wurde, ist in der Anmeldung JP 99 619 beschrieben.

Notwendige Voraussetzung, um in kurzer Zeit z.B. <8 Stunden vom Oligocarbonat zum Polycarbonat mittels Festphasennachkondensation zu gelangen, ist ein OH-Endgruppengehalt >30 %*.

$$* \qquad X\ \% = \frac{\text{Zahl der OH-Endgruppen}}{\text{Gesamtzahl der Endgruppen}} \times 100$$

Liegt der OH-Endgruppengehalt jedoch >45 %, so steigt der OH-Gew.-%-Endgruppengehalt im resultierenden Polycarbonat auf über 250 ppm an.

OH-Gew.-%-Endgruppengehalte von >250 ppm im Polycarbonat führen bekannterweise zu schlechteren thermischen Stabilitäten und zu höherer Vergilbung des Polycarbonats; somit sollte, um zu einem Polycarbonat mit einem guten Eigenschaftsbild zu gelangen, ein kristallines Oligocarbonat mit einem OH-Endgruppengehalt von 30 bis 45 % in die Festphasennachkondensation eingesetzt werden.

Zahlreiche Versuche zeigen, daß eine somit notwendige gezielte Oligomerensynthese, die immer zu Oligomeren mit einem OH-Endgruppengehalt von 30 bis 45 % führt, über das Phasengrenzflächenverfahren reproduzierbar schwer durchführbar ist.

Es wurde nun gefunden, daß durch geeignetes Abmischen der beiden verschiedenen, gezielt terminierten Oligomeren der Formeln 1 und 2 oder einer Mischung von einem Oligomeren/Monomeren der Formeln 1 und 3 bzw. der Formeln 2 und 4, ein Gemisch mit dem gewünschten OH-Endgruppengehalt von 30 bis 45 % erhalten wird, das nach der Kristallisation überraschenderweise in der festen Phase zum aromatischen, lösungsmittelfreien Polycarbonat mit einem OH-Gew.-%-Endgruppengehalt <250 ppm polykondensierbar ist.

Den Oligocarbonaten der Formeln 1 und 2 und den Monomeren der Formel 4 liegen beispielsweise die folgenden Diphenole zugrunde:

Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
$\alpha,\alpha'$-Bis-(hydroxyphenyl)-diisopropylbenzole,
sowie deren kernalkylierte oder kernhalogenierte Verbindungen.

Bevorzugte Diphenole sind z.B.:

2,2-Bis-(4-hydroxyphenyl)-propan,
2,4-Bis-(4-hydroxyphenyl)-2-methylbutan,
1,1-Bis-(4-hydroxyphenyl)-p-diisopropylbenzol,
2,2-Bis-(3-methyl-4-hydroxyphenyl)-propan,

2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-p-diisopropylbenzo,
1,1-Bis-(3,5-dimethyl-4-hydroxyphenyl)-2-methylbutan,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-3,3,5-trimethylcyclohexan.

Besonders bevorzugte Diphenole sind z.B.
4,4'-Dihydroxydiphenyl,
4,4'-Dihydroxydiphenylsulfid,
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan und
1,1Bis-(4-hydroxyphenyl)-3,3,5-trimethylcyclohexan.

Die Oligocarbonate können durch den Einsatz geringer Mengen Verzweiger verzweigt werden. Einige geeignete Verzweiger sind:
Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4-hydroxyphenyl-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-orthoterephthalsäureester,
Tetra-(4-hydroxyphenyl)-methan,
Tetra-(4-(4-hydroxyphenyl-isopropyl)-phenoxy)-methan,
1,1-Bis-((4',4''-dihydroxytriphenyl)-methyl)-benzol und insbesondere
α,α',α''-Tris-(4-hydroxyphenyl)-1,3,5-triisopropenylbenzol.
Weitere mögliche Verzweiger sind 2,4-Dihydroxybenzoesäure, Trimesinsäure, Cyanurchlorid und 3,3-Bis-(3-methyl-4-hydroxyphenyl)-2,3-dihydroindol.

Die gegebenenfalls mitzuverwendenden 0,05 bis 2 Mol-%, bezogen auf eingesetzte Mole Diphenole, an Verzweigern, können entweder mit den Diphenolen selbst in der wäßrigen alkalischen Phase vorgelegt werden, oder in einem organischen Lösungsmittel (vor der Phosgenierung) zugegeben werden.

Die Verzweigung kann aber auch durch Zusatz der Verzweiger zu den gezielt terminierten, linearen Oligomeren der Formeln 1 und 2 oder zur Mischung von einem Oligomeren/Monomeren der Formeln 1 und 3 bzw. der Formeln 2 und 4 erfolgen, die dann zusammen kristallisiert und festphasennachkondensiert werden. Eine Kombination beider Verzweigungen in Stufe 1 und 2 ist ebenfalls möglich.

Die aromatischen Oligocarbonate der 1. Stufe des erfindungsgemäßen Verfahrens sollten mittlere Molmassen $\overline{M}_w$ von 1.000 bis 17.000, vorzugsweise 2.000 bis 10.000 haben, ermittelt durch Messung der rel. Lösungsviskosität in Dichlormethan oder in Mischungen gleicher Gewichtsmengen Phenol/o-Dichlorbenzol bzw. durch Messung der Lichtstreuung. Bevorzugte Oligocarbonate enthalten mindestens 50 Mol-%, bezogen auf Mole einkondensierter Diphenole, einkondensiertes Bisphenol-A.

Die Synthese des Oligocarbonats der Formel 1, in der 1. Stufe des Verfahrens, gelingt durch das Phasengrenzflächenverfahren, wobei auf den Einsatz von Molmassenregler verzichtet wird und die verwendeten Katalysatoren z.B. Lewatit, Trimethylamin weitgehend chlorverseifende und keine molekulargewichtsaufbauende Funktion ausüben.

Zur Begrenzung der Molmassen $\overline{M}_w$ des Oligomeren der Formel 2, in der 1. Stufe des Verfahrens, werden in bekannter Weise Molmassenregler, wie beispielsweise Phenol, Alkylphenol, Phenylchlorkohlensäureester oder Alkylchlorkohlensäureester in den berechneten oder zu erprobenden Mengen eingesetzt.

Die Auswahl des oder der Molmassenregler bei der 1. Stufe richtet sich nach dem oder den gewünschten flüchtigen Kondensationsprodukten, die während der 3. Stufe des erfindungsgemäßen Verfahrens entstehen sollen. Phenol als Kettenabbrecher liefert bei der Festphasennachkondensation Phenol und gegebenenfalls Diphenylcarbonat, Alkylchlorkohlensäureester liefert Alkohol und gegebenenfalls Dialkylcarbonat.

Bevorzugt als Molmassenregler sind Phenole und Alkylchlorkohlensäureester.

Die Kristallisation der Oligomerenmischungen bzw. Oligomeren/Monomeren-Mischung, in der 2. Stufe des Verfahrens, gelingt durch Einengen ihrer Lösungen, durch Kristallisation unter Scherung, durch das Dotieren mit bereits kristallisiertem Material oder durch Fällung mit Fällungsmittel. Als Fällungsmittel kommen z.B. u.a. Methanol, Cyclohexan, Aceton, Isopropanol, Wasser, Heptan, Hexan in Betracht.

Die bei der Festphasennachkondensation in der 3. Stufe des erfindungsgemäßen Verfahrens erhaltenen Polycarbonate sollen $M_w$-Werte von 15.000 bis 200.000, vorzugsweise 20.000 bis 60.000 erreichen, sowie einen OH-Gew.-%-Endgruppengehalt <250 ppm, vorzugsweise <175 ppm.

Für die Festphasennachkondensation werden die teilkristallinen Oligomeren/Monomeren-Mischungen entweder im Vakuum und/oder unter einem Inertgas z.B. Stickstoff, Argon, Kohlendioxid auf Temperaturen unterhalb des Kristallitschmelzpunktes, z.B. Aufheizen auf 180 ° C, Erhöhung der Temperatur von 180 ° C auf 220 ° C in 2 Stunden, Festphasennachkondensation bei 220 ° C, erhitzt, um einen niedrigen Partialdruck zu erzeugen und die bei der Reaktion entstehenden Monomeren zu entfernen, wobei die Teilchen der Vorkondensate nicht erweichen, verkleben oder verbacken. Die Temeratur der Festphasen nachkondensation liegt somit bei Temperaturen unterhalb der Schmelztemperatur $T_m$ des Oligomeren und oberhalb der Einfriertemperatur $T_g$ des Oligomeren.

Es kann vorteilhaft sein, die Festphasennachkondensation der Oligocarbonate durch kleine Mengen (1 ppm bis 1 Gew.-%) von Katalysatoren zu beschleunigen. Als Katalysatoren kommen u.a. LiOH, NaOH, $Na_2CO_3$, $Ca(OH)_2$, $CaCO_3$, Tetraalkyltitanat, Dibutyldibutoxyzinn, Chinolin, Triphenylphosphin in Frage. Zumeist sind Spuren von Alkalihydroxid ausreichend.

Zur Verbesserung der Eigenschaften können den erfindungsgemäß hergestellten Polycarbonaten Hilfs- und Verstärkungsstoffe zugemischt werden. Als solche sind u.a. in Betracht zu ziehen: Stabilisatoren, Fließhilfsmittel, Entformungsmittel, Brandschutzmittel, Pigmente, fein zerteilte Mineralien, Faserstoffe, z.B. Alkyl- und Arylphosphite, -phosphate, -phosphine, niedermolekulare Carbonsäureester, Halogenverbindungen, Salze, Kreide, Quarzmehl, Glas- und Kohlenstoffasern.

Weiterhin können den erfindungsgemäßen Polycarbonaten auch andere Polymere zugemischt werden, z.B. Polyolefine, Polyurethane oder Polystyrol.

Der Zusatz dieser Stoffe erfolgt vorzugsweise auf herkömmlichen Aggregaten zum fertigen Polycarbonat, kann jedoch, je nach den Erfordernissen, auf einer anderen Stufe des erfindungsgemäßen Verfahrens erfolgen.

Darüber hinaus ist für besondere Anwendungen auch die Modifizierung der Polycarbonate durch Einkondensation von Blöcken, Segmenten mit OH-Endgruppen möglich, insbesondere von Siloxanblöcken mit OH-Endgruppen, aromatischen und aliphatischen Polyestern mit OH-Endgruppen, Polyphenylensulfid-Blöcken mit OH-Endgruppen oder Polyphenylenoxid-Blöcken mit OH-Endgruppen. Die Einkondensation dieser Blöcke kann in der 1. Stufe des erfindungsgemäßen Verfahrens, vorzugsweise aber in der 3. Stufe des Verfahrens, erfolgen.

Die erfindungsgemäß hergestellten Polycarbonate können in den üblichen Maschinen zu Halbzeugen, Formkörper, Folien verarbeitet werden. Die Verwendung dieser Produkte erfolgt beispielsweise in der Elektrotechnik und im Kraftfahrzeugbau.

Beispiel 1

a. Vorschrift zur Synthese eines gezielt arylterminierten Oligomeren entsprechend Formel 2:
In einem 2 l-Dreihalskolben mit Rührer, Tropftrichter und Gaseinleitungsrohr wurden unter Stickstoffbegasung 342,4 g (1,5 Mol) Bisphenol A in 3432 g destilliertes Wasser, unter Zusatz von 192 g NaOH, gelöst. Die klare, farblose Lösung wird mit 23,85 g (0,253 Mol) Phenol, gelöst in 856 ml Dichlormethan, versetzt und auf 20 ° C gekühlt. Unter heftigem Rühren werden dann 192,9 g Phosgen (1,95 Mol) mit ca. 2 g/min in die Emulsion eingeleitet. Die Temperatur wird dabei zwischen 20-25 ° C gehalten. Nach Zugabe der Phosgenmenge werden 1,6 ml N-Ethylpiperidin zugegeben und die Emulsion 45 min bei Raumtemperatur gerührt. Anschließend werden die Phasen getrennt und die Dichlormethanphase 2 mal mit je 500 ml 1 %iger NaOH im Scheidetrichter extrahiert. Die so behandelte Lösung wird mit 10 %iger Phosphorsäure sauer eingestellt und anschließend mit destilliertem Wasser elektrolytfrei gewaschen. Um das Restwasser zu entfernen, läßt man die Dichlormethanlösung über Natriumsulfat stehen und filtriert nach einer halben Stunde von diesem ab. Das Filtrat wird am Rotationsverdampfer eingedampft und der Rückstand im Wasserstrahlvakuum 16 h bei 110 ° C vom Restlösungsmittel weitgehend befreit.

Man erhält ein kristallines Oligomer mit einer relativen Lösungsviskosität (Dichlormethan, 25 ° C, 5 g/l) von 1,090 ($M_w$ = 9.000).

Der Gehalt an phenolischem OH ist <0,006 % und der verseifbare Cl-Wert <2 ppm. Die Ausbeute beträgt 97 % d.Th..

b.1 Vorschrift zur Synthese eines gezielt OH-terminierten Oligomeren entsprechend der Formel 1:

In einem 2 l-Dreihalskolben mit Rührer, Tropftrichter und Gaseinleitungsrohr wurden unter Stickstoffbegasung 342,2 g (1,5 Mol) Bisphenol A in 3432 g destilliertes Wasser, unter Zusatz von 264 g NaOH, gelöst. Unter heftigem Rühren werden dann 237,4 Phosgen (2,4 Mol) in 45 min in die Emulsion eingeleitet. Die Temperatur wird dabei zwischen 20-25 ° C gehalten. Nach Zugabe der Phosgenmenge werden 2,8 ml Trimethylamin zugegeben und die Emulsion 2 Stunden bei Raumtemperatur gerührt. Anschließend werden die Phasen getrennt und die Dichlormethanphase 2 mal mit je 500 ml 1 %iger NaOH im Scheidetrichter extrahiert. Die so behandelte Lösung wird mit 10 %iger Phosphorsäure sauer eingestellt und anschließend mit destilliertem Wasser elektrolytfrei gewaschen. Um das Restwasser zu entfernen, läßt man die Dichlormethanlösung über Natriumsulfat stehen und filtriert nach einer halben Stunde von diesem ab. Das Filtrat wird am Rotationsverdampfer eingedampft und der Rückstand im Wasserstrahlvakuum 16 h bei 110 ° C vom Restlösungsmittel weitgehend befreit.

Man erhält ein kristallines Oligomer mit einer relativen Lösungsviskosität (Dichlormethan, 25 ° C, 5 g/l) von 1,168 ($M_w$ = 16.800). Der Gehalt an phenolischem OH ist 0,38 % und der verseifbare Cl-Wert (2 ppm. Die Ausbeute beträgt 97 % d.Th..

b.2

Vorschrift wie unter Beispiel 1 b.1 beschrieben, aber es wurden 91,3 g Bisphenol-A, 70,4 g NaOH, 915 g destilliertes Wasser, 685 ml Dichlormethan und 63,3 g Phosgen eingesetzt. Anstatt von Trimethylamin wurden 200 g Lewatit MP 500 eingesetzt. Man erhält ein kristallines Oligomer mit einer relativen Lösungsviskosität (Dichlormethan, 25 ° C, 5 g/l) von 1,132 ($M_w$ = 13.200). Der Gehalt an phenolischem OH ist <0,41 % und der verseifbare Cl-Wert <2 ppm. Die Ausbeute beträgt 88,9 % d.Th..

6,2 g des, nach 1.a geschilderten Verfahrens synthetisierten, arylcarbonatterminierten Oligocarbonats werden mit 6,0 g des wie unter b.1 beschrieben dargestellten Oligocarbonats in 120 ml Dichlormethanm gelöst, am Rotationsverdampfer eingedampft und der Rückstand im Wasserstrahlvakuum 16 h bei 110 ° C vom Restlösungsmittel weitgehend befreit. Man erhält ein kristallines Oligomer mit einem OH-Arylcarbonat-Endgruppenverhältnis von 40:60.

12,2 g von diesem Oligomeren werden nun in einer Glasapparatur bei einem Druck von 6 mbar und einer Durchströmungsgeschwindigkeit des Schleppgases von 6 l Stickstoff/h mit Hilfe eines Temperprogramms 1 h 180 ° C = >200 ° C 1 h = >220 ° C, 6 h 220 ° C erhitzt. Man erhält ein kristallines, farbloses Polycarbonat mit einer relativen Lösungsviskosität (Dichlormethan, 25 ° C, 5 g/l) von 1,346 ($M_w$ = 34.600). Der Gehalt an phenolischem OH ist 200 ppm und der Restdichlormethan-Gehalt (2 ppm.

Beispiel 2

7,2 g des, nach 1.a geschilderten Verfahrens synthetisierten, arylcarbonatterminierten Oligocarbonats werden mit 4,8 g des, wie unter b.1 beschrieben, dargestellten Oligocarbonats in 120 ml Dichlormethan gelöst, am Rotationsverdampfer eingedampft und der Rückstand im Wasserstrahlvakuum 16 h bei 110 ° C vom Restlösungsmittel weitgehend befreit. Man erhält ein kristallines Oligomer mit einem OH/Arylcarbonat-Endgruppenverhältnis von 30:70.

12,0 g von diesem Oligomeren werden nun in einer Glasapparatur bei einem Druck von 6 mbar und einer Durchströmungsgeschwindigkeit des Schleppgases von 6 l Stickstoff/h mit Hilfe eines Temperprogramms 1 h 180 ° C = >200 ° C 1 h = >220 ° C, 6 h 220 ° C erhitzt. Man erhält ein kristallines, farbloses Polycarbonat mit einer relativen Lösungsviskosität (Dichlormethan, 25 ° C, 5 g/l) von 1,248 ($M_w$ = 24.800). Der Gehalt an phenolischem OH ist 100 ppm und der Restdichlormethan-Gehalt <2 ppm.

Beispiel 3

Wie Beispiel 2, nur werden 4,8 g arylcarbonatterminiertes Oligocarbonat und 7,2 g des, wie unter b.1 beschrieben, dargestellten Oligocarbonats, eingesetzt.

(OH/Arylcarbonat-Endgruppenverhältnis von 50:50). Man erhält ein kristallines, farbloses Polycarbonat mit einer relativen Lösungsviskosität (Dichlormethan, 25 ° C, 5 g/l) von 1,417 ($M_w$ = 41.700). Der Gehalt an phenolischem OH ist 570 ppm und der Restdichlormethan-Gehalt <2 ppm.

Beispiel 4

Wie Beispiel 2, nur werden 10,5 g arylcarbonatterminiertes Oligocarbonat und 4,5 g des, wie unter b.1 beschrieben, dargestellten Oligocarbonats, eingesetzt. (OH/Arylcarbonat-Endgruppenverhältnis von 22,5:77,5). Man erhält ein kristallines, farbloses Polycarbonat mit einer relativen Lösungsviskosität (Dichlormethan, 25°C, 5 g/l) von 1,189 ($M_w$ = 18.900). Der Gehalt an phenolischem OH ist 100 ppm und der Restdichlormethan-Gehalt <2 ppm.

Beispiel 5

Wie im Beispiel 2, nur werden 12 g arylcarbonatterminiertes Oligocarbonat und 3 g des, wie unter b.1 beschrieben, dargestellten Oligocarbonats, eingesetzt. (OH/Arylcarbonat-Endgruppenverhältnis von 15:85). Man erhält ein kristallines, farbloses Polycarbonat mit einer relativen Lösungsviskosität (Dichlormethan, 25°C, 5 g/l) von 1,170 ($M_w$ = 17.000). Der Gehalt an phenolischem OH ist 90 ppm und der Restdichlormethan-Gehalt <2 ppm.

Beispiel 6

Wie Beispiel 2, nur werden 4,5 g arylcarbonatterminiertes Oligocarbonat und 10,5 g des, wie unter b.1 beschrieben, dargestellten Oligocarbonats, eingesetzt. (OH/Arylcarbonat-Endgruppenverhältnis von 40:60). Man erhält ein kristallines, farbloses Polycarbonat mit einer relativen Lösungsviskosität (Dichlormethan, 25°C, 5 g/l) von 1,423 ($M_w$ = 42.300). Der Gehalt an phenolischem OH ist 1.000 ppm und der Restdichlormethan-Gehalt <2 ppm.

Beispiel 7

Wie Beispiel 2, nur werden 1,5 g arylcarbonatterminiertes Oligocarbonat und 13,5 g des, wie unter b.1 beschrieben, dargestellten Oligocarbonats, eingesetzt. (OH/Arylcarbonat-Endgruppenverhältnis von 85:15). Man erhält ein kristallines, farbloses Polycarbonat mit einer relativen Lösungsviskosität (Dichlormethan, 25°C, 5 g/l) von 1,309 ($M_w$ = 30.900). Der Gehalt an phenolischem OH ist 2.500 ppm und der Restdichlormethan-Gehalt <2 ppm.

Beispiel 8

15 g des, nach 1.a geschilderten Verfahrens synthetisierten, arylcarbonatterminierten Oligocarbonats werden mit 0,65 g Bisphenol A, in 5 ml Methanol gelöst, zusammen in 200 ml Dichlormethan gelöst, am Rotationsverdampfer eingedampft und der Rückstand im Wasserstrahlvakuum 16 h bei 110°C vom Restlösungsmittel weitgehend befreit. Man erhält ein kristallines Oligomer, das nur in einer Glasapparatur bei einer Durchströmungsgeschwindigkeit des Schleppgases von 6 l Stickstoff/h mit Hilfe eines Temperprogramms 1 h 180°C = >200°C 1 h = >220°C, 1 h 220°C erhitzt wird. Nach diesen 3 Stunden wird das Vakuum (6 mbar) angelegt und weitere 5 h erhitzt. Man erhält ein kristallines, farbloses Polycarbonat mit einer relativen Lösungsviskosität (Dichlormethan, 25°C, 5 g/l) von 1,339 ($M_w$ = 33.900). Der Gehalt an phenolischem OH ist 250 ppm und der Restdichlormethan-Gehalt <2 ppm.

Beispiel 9

15 g des, nach 1.a geschilderten Verfahrens synthetisierten, arylcarbonatterminierten Oligocarbonats werden mit 0,51 g Bisphenol A, in 5 ml Methanol gelöst, zusammen in 200 ml Dichlormethan gelöst, am Rotationsverdampfer eingedampft und der Rückstand im Wasserstrahlvakuum 16 h bei 110°C vom Restlösungsmittel weitgehend befreit. Man erhält ein kristallines Oligomer, das nur in einer Glasapparatur bei einer Durchströmungsgeschwindigkeit des Schleppgases von 6 l Stickstoff/h mit Hilfe eines Temperprogramms 1 h 180°C = >200°C 1 h = >220°C, 1 h = 220°C erhitzt wird. Nach diesen 3 Stunden wird das Vakuum (6 mbar) angelegt und weitere 5 h erhitzt. Man erhält ein kristallines, farbloses Polycarbonat mit einer relativen Lösungsviskosität (Dichlormethan, 25°C, 5 g/l) von 1,189. Der Gehalt an phenolischem OH ist 190 ppm und der Restdichlormethan-Gehalt (2 ppm.

Beispiel 10

0,41 g Diphenylcarbonat und 7,2 g des, wie unter b.1 beschrieben, dargestellten Oligocarbonats werden in 200 ml Dichlormethan gelöst, am Rotationsverdampfer eingedampft und der Rückstand im Wasserstrahlvakuum 16 h bei 110 °C vom Restlösungsmittel weitgehend befreit. Man erhält ein kristallines Oligomer, daß nur in einer Glasapparatur bei einer Durchströmungsgeschwindigkeit des Schleppgases von 6 l Stickstoff/h mit Hilfe eines Temperprogramms 1 h 180 °C = >200 °C 1 h = >220 °C, 1 h 220 °C erhitzt wird. Nach diesen 3 Stunden wird das Vakuum (6 mbar) angelegt und weitere 5 h erhitzt. Man erhält ein kristallines, farbloses Polycarbonat mit einer relativen Lösungsviskosität (Dichlormethan, 25 °C, 5 g/l) von 1,273 ($M_w$ = 27.300). Der Gehalt an phenolischem OH ist 3.500 ppm und der Restdichlormethan-Gehalt <2 ppm eingesetzt.

Beispiel 11

17 g des, nach 1.a geschilderten Verfahrens synthetisierten, arylcarbonatterminierten Oligocarbonat werden mit 1,07 g 1,1-Bis-(4-hydroxyphenyl)-3,3,5-trimethylcyclohexan, in 5 ml Methanol gelöst, zusammen in 200 ml Dichlormethan gelöst, am Rotationsverdampfer eingedampft und der Rückstand im Wasserstrahlvakuum 16 h bei 110 °C vom Restlösungsmittel weitgehend befreit. Man erhält ein kristallines Oligomer, das nun in einer Glasapparatur bei einer Durchströmungsgeschwindigkeit des Schleppgases von 6 l Stickstoff/h mit Hilfe eines Temperprogramms 1 h 180 °C = >200 °C 1 h = >220 °C, 1 h 220 °C erhitzt wird.

Nach diesen Stunden wird das Vakuum (6 mbar) angelegt und weitere 3 h erhitzt. Man erhält ein kristallines, schwach gelbliches Polycarbonat mit einer relativen Lösungsviskosität (Dichlormethan, 25 °C, 5 g/l) von 1,300 ($M_w$ = 30.000). Der Gehalt an phenolischem OH ist 190 ppm und der Restdichlormethan-Gehalt <2 ppm.

Beispiel 12

15 g des, nach 1.a geschilderten Verfahrens synthetisierten, arylcarbonatterminierten Oligocarbonats werden mit 0,57 g 4,4-Dihydroxydiphenyl, in 5 ml Methanol gelöst, zusammen in 200 ml Dichlormethan gelöst, am Rotationsverdampfer eingedampft und der Rückstand im Wasserstrahlvakuum 16 h bei 110 °C vom Restlösungsmittel weitgehend befreit. Man erhält ein kristallines Oligomer, das nun in einer Glasapparatur bei einer Durchströmungsgeschwindigkeit des Schleppgases von 6 l Stickstoff/h mit Hilfe eines Temperprogramms 1 h 180 °C = >200 °C 1 h = >220 °C, 1 h 220 °C erhitzt wird. Nach diesen 3 Stunden wird das Vakuum (6 mbar) angelegt und weitere 4 h erhitzt.
Man erhält ein kristallines, farbloses Polycarbonat mit einer relativen Lösungsviskosität (Dichlormethan, 25 °C, 5 g/l) von 1,330 ($M_w$ = 33.000). Der Gehalt an phenolischem OH ist 110 ppm und der Restdichlormethan-Gehalt <2 ppm.

Beispiel 13

15 g des, nach 1.a geschilderten Verfahrens synthetisierten, arylcarbonatterminierten Oligocarbonats werden mit 0,45 g Bisphenol A und 0,163 g $\alpha,\alpha',\alpha''$-Tris-(4-hydroxyphenyl)-1,3,5-triisopropenylbenzol, in 5 ml Methanol gelöst, zusammen in 200 ml Dichlormethan gelöst, am Rotationsverdampfer eingedampft und der Rückstand im Wasserstrahlvakuum 16 h bei 110 °C vom Restlösungsmittel weitgehend befreit.

Beispiel 14

15 g des, nach 1.a geschilderten Verfahrens synthetisierten, arylcarbonatterminierten Oligocarbonats werden mit 0,70 g 4,4'-Dihydroxydiphenylsulfid, in 5 ml Methanol gelöst, zusammen in 200 ml Dichlormethan gelöst, am Rotationsverdampfer eingedampft und der Rückstand im Wasserstrahlvakuum 16 Stunden bei 110 °C vom Restlösungsmittel weitgehend befreit.

Man erhält ein kristallines Oligomer, das nun in einer Glasapparatur bei einer Durchströmungsgeschwindigkeit des Schleppgases von 6 l Stickstoff/h mit Hilfe eines Temperprogramms 1 h 180 °C = >200 °C 1 h = >220 °C, 1 h 220 °C erhitzt wird. Nach diesen 3 Stunden wird das Vakuum (6 mbar) angelegt und weitere 4 h erhitzt. Man erhält ein kristallines, farbloses Polycarbonat mit einer relativen Lösungsviskosität (Dichlormethan, 25 °C, 5 g/l) von 1,277 ($M_w$ = 27.700). Der Gehalt an phenolischem OH ist 150 ppm und der Restdichlormethan-Gehalt <2 ppm.

Beispiel 15

15 g des, nach 1.a geschilderten Verfahrens synthetisierten, arylcarbonatterminierten Oligocarbonats

werden mit 0,60 g Bisphenol A und 0,814 g eines Polydimethylsiloxanblocks ($P_n$ = 65) mit Bisphenol A-Endgruppen, in 5 ml Methanol gelöst, zusammen in 200 ml Dichlormethan gelöst, am Rotationsverdampfer eingedampft und der Rückstand im Wasserstrahlvakuum 16 h bei 110 °C vom Restlösungsmittel weitgehend befreit. Man erhält ein kristallines Oligomer, das nun in einer Glasapparatur bei einer Durchströmungsgeschwindigkeit des Schleppgases von 6 l Stickstoff/h mit Hilfe eines Temperprogramms 1 h 180 °C = >200 °C 1 h = >220 °C, 1 h 220 °C erhitzt wird. Nach diesen 3 Stunden wird das Vakuum (6 mbar) angelegt und weitere 4 h erhitzt.

Man erhält ein kristallines, farbloses Polycarbonat mit einer relativen Lösungsviskosität (Dichlormethan, 25 °C, 5 g/l) von 1,306 ($M_w$ = 30.600).

Der Gehalt an phenolischem OH ist 210 ppm und der Restdichlormethan-Gehalt <2 ppm.

Beispiel 16

Vorschrift zur Synthese eines gezielt alkylterminierten Oligomeren entsprechend Formel 2:
In einem 2 l-Dreihalskolben mit Rührer, Tropftrichter und Gaseinleitungsrohr wurden unter Stickstoffbegasung 45,7 (0,2 Mol) Bisphenol A in 696 g destilliertes Wasser, unter Zusatz von 48 g NaOH, gelöst. Die klare, farblose Lösung wird mit 7,86 ml (0,1 Mol) Chlorameisensäuremethylester, gelöst in 343 ml Dichlormethan, versetzt und auf 20 °C gekühlt. Unter heftigem Rühren werden dann 39,6 g Phosgen (0,4 Mol) mit ca. 2 g/min in die Emulsion eingeleitet. Die Temperatur wird dabei zwischen 20 bis 25 °C gehalten. Nach Zugabe der Phosgenmenge werden 0,27 ml N-Ethylpiperidin zugegeben und die Emulsion 45 min bei Raumtemperatur gerührt. Anschließend werden die Phasen getrennt, die Dichlormethanphase mit 10 %iger Phosphorsäure sauer eingestellt und anschließend mit destilliertem Wasser elektrolytfrei gewaschen. Um das Restwasser zu entfernen, läßt man die Dichlormethanlösung über Natriumsulfat stehen und filtriert nach einer halben Stunde von diesem ab. Das Filtrat wird am Rotationsverdampfer eingedampft und der Rückstand im Wasserstrahlvakuum 16 h bei 110 °C vom Restlösungsmittel weitgehend befreit.

Man erhält ein kristallines Oligomer mit einer relativen Lösungsviskosität (Dichlormethan, 25 °C, 5 g/l) von 1,151 ($M_w$ = 15.100).

Der Gehalt an phenolischem OH ist <0,006 % und der verseifbare Cl-Wert <2 ppm. Die Ausbeute beträgt 90 % der Theorie.

11,2 g des synthetisierten, alkylcarbonatterminierten Oligocarbonats werden mit 6,5 g des wie unter b.2 beschrieben dargestellten Oligocarbonats mit 0,0177 g Dibutylzinndilaurat in 220 ml Dichlormethanm gelöst, am Rotationsverdampfer eingedampft und der Rückstand im Wasserstrahlvakuum 16 h bei 110 °C vom Restlösungsmittel weitgehend befreit. Man erhält ein kristallines Oligomer mit einem OH/Alkylcarbonat-Endgruppenverhältnis von 40:60.
12,2 g von diesem Oligomeren werden nun in einer Glasapparatur bei einem Druck von 6 mbar und einer Durchstrmungsgeschwindigkeit des Schleppgases von 6 l Stickstoff/h mit Hilfe eines Temperprogramms 1 h 180 °C = >200 °C 1 h = >220 °C, 6 h 220 °C erhitzt. Man erhält ein kristallines, farbloses Polycarbonat mit einer relativen Lösungsviskosität (Dichlormethan, 25 °C, 5 g/l) von 1,215 ($M_w$ = 21.500). Der Gehalt an phenolischem OH ist 155 ppm und der Restdichlormethan-Gehalt <2 ppm.

**Patentansprüche**

**1.** 3-Stufen-Verfahren zur Herstellung von aromatischem, lösungsmittelfreiem Polycarbonat, dadurch gekennzeichnet, daß man

1. mittels des bekannten Phasengrenzflächenverfahrens zwei verschiedene, definiert terminierte Oligocarbonate der Formeln 1 und 2 herstellt,

$$HO-[A_1-Y-A_2-O-\underset{\underset{O}{\|}}{C}-O]_n-A_1-Y-A_2-OH \qquad (1)$$

$$Z-O-[\underset{\underset{O}{\|}}{C}-O-A_1-Y-A_2-O]_n-\underset{\underset{O}{\|}}{C}-O-Z \qquad (2)$$

wobei

- $A_1, A_2$ = unabhängige, divalente carbocyclische oder heterocyclische aromatische Gruppen,
- Y = eine divalente Gruppe oder eine Einfachbindung und
- Z = Alkyl- oder Arylgruppen darstellen und
- n = Zahlen von 1 bis 75 annehmen kann,

2. eine Mischung der beiden verschiedenen Oligomeren der Formeln 1 und 2 oder eine Mischung von einem Oligomeren/Monomeren der Formeln 1 und 3 bzw. der Formeln 2 und 4

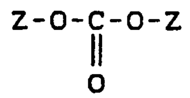
(3)

HO-$A_1$-Y-$A_2$-OH (4),

worin

- $A_1, A_2$ = unabhängige, divalente carbocyclische oder heterocyclische aromatische Gruppen,
- Y = eine divalente Gruppe oder eine Einfachbindung und
- Z = Alkyl- oder Arylgruppen sind,

kristallisiert und

3. anschließend in der festen Phase polykondensiert.

**2.** Verfahren nach Anspruch 1, dadurch gekennzeichnet, daß die Mischungen der beiden verschiedenen Oligomeren/Monomeren der Formeln 1 und 3 bzw. der Formeln 2 und 4 einen OH-Endgruppengehalt im Bereich von 30 bis 45 % haben.

**3.** Verfahren nach den Ansprüchen 1 und 2, dadurch gekennzeichnet, daß die teilkristallinen Mischungen der Stufe 2 des Verfahrens bei der Festphasennachkondensation 0 ppm bis 1 Gew.-% Kondensationskatalysatoren enthalten.

**4.** Verfahren nach den Ansprüchen 1 bis 3, dadurch gekennzeichnet, daß die in der 1. Stufe hergestellten Oligocarbonate mittlere Molmassen $\overline{M}_w$ im Bereich von 1.000 bis 17.000 aufweisen.

**5.** Verfahren nach den Ansprüchen 1 bis 4, dadurch gekennzeichnet, daß die für die Oligocarbonate der 1. Stufe eingesetzten Diphenole zu mindestens 50 Mol-% aus Bisphenol A bestehen.

**6.** Verfahren nach den Ansprüchen 1 bis 5, dadurch gekennzeichnet, daß die Festphasennachkondensation bei Temperaturen unterhalb $T_m$ und oberhalb $T_g$ des jeweiligen Oligomeren durchgeführt wird.

**7.** Verfahren nach den Ansprüchen 1 bis 6, dadurch gekennzeichnet, daß die entstehenden Polycarbonate, durch Einsatz geeigneter Verzweiger in der Stufe 1 und/oder 2, verzweigt werden können.

**8.** Verfahren nach den Ansprüchen 1 bis 7, dadurch gekennzeichnet, daß die Kristallisation der Oligomerenmischungen bzw. Oligomeren/Monomeren-Mischung in der Stufe 2 des Verfahrens, durch Einengen ihrer Lösungen, durch Kristallisation unter Scherung, durch das Dotieren mit bereits kristallisiertem Material oder durch Fällung mit Fällungsmittel erreicht wird.

**9.** Verfahren nach den Ansprüchen 1 bis 8, dadurch gekennzeichnet, daß in der Stufe 3 des erfindungsgemäßen Verfahrens ein lösungsmittelfreies, aromatisches Polycarbonat mit einem $M_w$ von 15.000 bis 200.000 und einem OH Gew.-%-Endgruppengehalt <250 ppm entsteht.

**10.** Verfahren nach den Ansprüchen 1 bis 9, dadurch gekennzeichnet, daß durch eine Einkondensation von Blöcken, Segmenten mit OH-Endgruppen, insbesondere von Siloxanblöcken mit OH-Endgruppen, aromatischen und aliphatischen Polyestern mit OH-Endgruppen, Polyphenylensulfid-Blöcken mit OH-Endgruppen oder Polyphenylenoxid-Blöcken mit OH-Endgruppen in der 1. Stufe des Verfahrens, eine Modifizierung der Polycarbonate erfolgt.

**11.** Verfahren nach Ansprüchen 1 bis 9, dadurch gekennzeichnet, daß durch Einkondensation von Blöcken, Segmenten mit OH-Endgruppen, insbesondere von Siloxanblöcken mit OH-Endgruppen, aromatische und aliphatischen Polyestern mit OH-Endgruppen, Polyphenylensulfid-Blöcken mit OH-Endgruppen oder Polyphenylenoxid-Blöcken mit OH-Endgruppen in der 3. Stufe des Verfahrens, eine Modifizierung der Polycarbonate erfolgt.